# EUROPEAN PATENT APPLICATION

(11) **EP 1 865 018 A1**
(43) Date of publication of application: **12.12.2007**
(21) Application number: 06715436.9
(22) Date of filing: 09.03.2006
(51) Int. Cl.: C08J 3/20

(54) **IONIZING-RADIATION CROSSLINKABLE POLYBUTYLENE TEREPHTHALATE RESIN PELLET**

(30) Priority: 30.03.2005 JP 2005098245
(71) Applicant: MITSUBISHI ENGINEERING-PLASTICS CORPORATION, Tokyo 104-0031 (JP)
(72) Inventor: TAJIRI, Toshiyuki, Hiratsuka-shi, Kanagawa 254-0016 (JP)
(74) Representative: HOFFMANN EITLE
(86) International application number: PCT/JP2006/304565
(87) International publication number: WO 2006/112196

(57) **Abstract**

The present invention relates to ionizing radiation-crosslinking PBT resin pellets having a high reflow resistance and a high mechanical strength which are suitable for lead-free soldering.

In the present invention, there is provided an ionizing radiation-crosslinking polybutylene terephthalate resin pellets comprising a crosslinking agent capable of acting upon exposure to an ionizing radiation,
a content of the crosslinking agent in the resin pellets being 1 to 25 parts by weight on the basis of 100 parts by weight of the polybutylene terephthalate resin, and
a content of an unreacted component in the crosslinking agent being not less than 75% by weight on the basis of the weight of the crosslinking agent.

## Description

### TECHNICAL FIELD

The present invention relates to ionizing radiation-crosslinking polybutylene terephthalate resin pellets, and more particularly ionizing radiation-crosslinking polybutylene terephthalate resin pellets having not only excellent heat resistance and mechanical strength but also excellent reflow resistance which are suitably used for lead-free soldering. In the followings, the polybutylene terephthalate is occasionally referred to merely as "PBT".

### BACKGROUND ART

PBT resins have been extensively used as engineering plastics in various applications such as automobiles and electric and electronic equipments because of excellent mechanical properties, electric properties and other physical and chemical properties as well as a good processability. In particular, the PBT resins exhibit a relatively high melting point, i.e., 225°C and are excellent in heat resistance and chemical resistance, and have been therefore frequently used as a housing material or an electrically insulating material for electronic parts such as connectors.

With the recent progress of reduction in size and increase in performance of electronic equipments, electronic parts used therein have also been required to have a high-density structure, so that parts such as connectors tend to be directly mounted on printed circuit boards or mounted on the surface of the electronic equipments. Also, these electronic parts have been conventionally mounted on the printed circuit boards by using a tin/lead alloy solder. However, in view of recent environmental problems, solders using no lead, i.e., so-called lead-free solders have been predominately used in practical applications. The melting point of the lead-free solders is higher by 20 to 40°C than that of the conventional tin/lead alloy solders. Therefore, there is a demand for developing and providing a housing material of printed circuit boards and connectors for surface mounting which exhibits a good soldering heat resistance (reflow resistance) even when exposed to a higher temperature than conventionally used, namely a resistance to deformation even when immersed in the soldering bath.

As the method for improving the reflow resistance under high temperature conditions, there has been proposed the method of using materials having a still higher heat resistance than that of the PBT resins, for example, so-called super engineering plastics such as PPS resins and liquid crystal polymers. However, these materials have problems including not only expensiveness but also poor injection moldability and, therefore, anisotropy of strength of the resultant molded products.

To solve the above problems, there have been studied the methods for obtaining PBT resins which have an excellent injection moldability and are free from problems such as a poor strength of the resultant molded products, by improving a reflow resistance thereof by ionizing radiation-crosslinking thereof. For example, there has been proposed the crosslinked film produced by blending a crosslinking agent such as triallyl isocyanurate and triallyl cyanurate in PBT, extruding the mixture into a film and then irradiating an electron beam to the film (Japanese Patent Application Laid-open (KOKAI) No. 57-212216(1982)). Such a crosslinked film can maintain its shape even after immersed in a soldering bath at 260°C, and the crosslinking degree of the film is enhanced with increase in the amount of the crosslinking agent blended therein. Therefore, it is expected that the crosslinked film exhibits an improved soldering heat resistance.

In general, upon producing a resin molded product from a PBT resin blended with a crosslinking agent, the resin and the crosslinking agent are first mixed and kneaded together to obtain pellets thereof, and then the resultant pellets are molded into a desired shape to obtain a resin molded product as aimed.

The crosslinking agent having a reactive double bond generally tends to be readily subjected to reaction between molecules thereof and, therefore, modified even by the action of other factors than ionizing radiation, e.g., heat. In particular, when exposed to a high-temperature of not less than 200°C in the melting and kneading step upon production of the above pellets or the pellet-molding step, the crosslinking agent tends to be modified by the reaction between molecules thereof, etc. As a result, even though an ionizing radiation is irradiated to the obtained resin molded product, the crosslinking reaction thereof tends to no longer proceed, so that the resin molded product may fail to be improved in heat resistance and mechanical strength to such an extent corresponding to increase in amount of the crosslinking agent blended in the PBT resin.

In addition, triallyl isocyanurate (melting point: 24 to 26°C) or triallyl cyanurate (melting point: 26 to 27°C) has a melting point close to room temperature. Therefore, even though the crosslinking agent is blended in a solid state with the PBT resin and the resin mixture is supplied an extruder, the crosslinking agent tends to be melted by heat generated in the extruder. The thus melted liquid crosslinking agent tends to has a lower viscosity than that of the molten resin in the extruder and therefore suffer from sagging, so that it may be difficult to obtain a uniformly blended composition. Further, upon feeding such a low-viscosity liquid to a mixer, the liquid also tends to cause sagging from a feeder thereof. As a result, it may be difficult to effect an accurate feed of the material itself. Besides, such a liquid crosslinking agent tends to be flowed back to the extruder and stay therein, resulting in undesirable modification thereof. For these reasons, in the conventional techniques, the PBT resins can be improved in reflow resistance only to a limited extent even by adding the crosslinking agent thereto.

### DISCLOSURE OF THE INVENTION

### PROBLEM TO BE SOLVED BY THE INVENTION

The present invention has been made in view of the above problems. An object of the present invention is to provide ionizing radiation-crosslinking PBT resin pellets having a high reflow resistance as well as a high mechanical strength which are suitable for lead-free soldering.

### MEANS FOR SOLVING PROBLEM

As a result of the present inventors' earnest study for solving the above problems, it has been found that upon producing pellets by mixing a crosslinking agent with PBT and melting and kneading the resultant mixture, when controlling a method of feeding the crosslinking agent as well as kneading conditions thereof, the crosslinking agent can be prevented from suffering from undesirable modification, resulting in production of pellets in which the unreacted crosslinking agent remains at a higher content. Further, it has been found that when forming the pellets into a molded product in which the unreacted crosslinking agent also remains at a higher content, and then exposing the molded product to a radiation, the resultant molded product can exhibit a high reflow resistance and a high mechanical strength. The present invention has been attained on the basis of the above findings.

Namely, to accomplish the aims, in a first aspect of the present invention, there are provided ionizing radiation-crosslinking polybutylene terephthalate resin pellets comprising a crosslinking agent capable of acting upon exposure to an ionizing radiation,
a content of the crosslinking agent in the resin pellets being 1 to 25 parts by weight on the basis of 100 parts by weight of the polybutylene terephthalate resin, and
a content of an unreacted component in the crosslinking agent being not less than 75% by weight on the basis of the weight of the crosslinking agent.

In a second aspect of the present invention, there is provided a process for producing the above polybutylene terephthalate resin pellets, comprising:
feeding a polybutylene terephthalate resin into a twin-screw extruder;
feeding the crosslinking agent into the extruder on a downstream side of a position at which the polybutylene terephthalate resin is fed into the extruder; and
controlling a residence time of the crosslinking agent within the extruder to not more than 2 min.

In a third aspect of the present invention, there is provided a molded product of an ionizing radiation-crosslinking polybutylene terephthalate resin which is produced by molding the pellets as defined in the above first aspect.

### EFFECT OF THE INVENTION

The PBT resin pellets of the present invention are improved in heat resistance such as reflow resistance as well as mechanical strength when exposed to an ionizing radiation. More specifically, the PBT resin pellets can be used as raw resin pellets for molded products which are used in various extensive application fields such as electric or electronic equipment parts such as typically surface mounting connectors, automobile electric equipments and mechanical precision parts. In addition, there can be attained such an advantage that the PBT resin pellets are produced without using an excessive amount of a crosslinking agent.

### BRIEF DESCRIPTION OF DRAWING

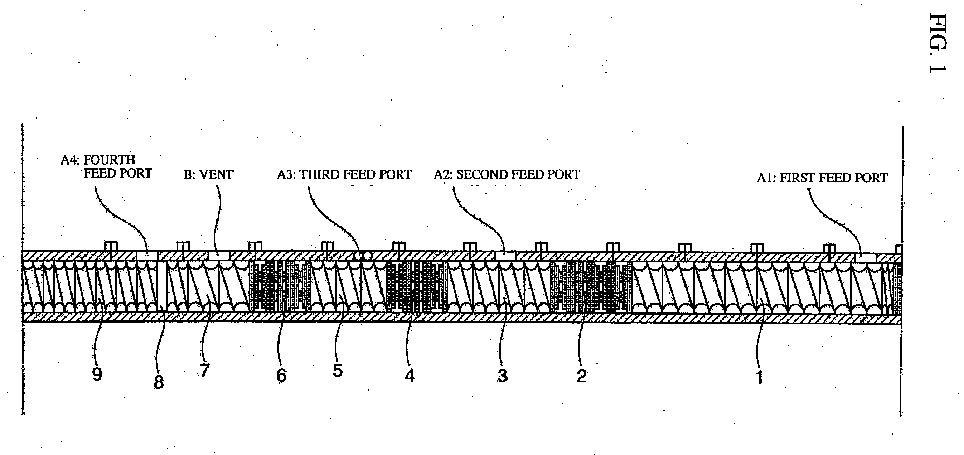

Fig. 1 is an explanatory view showing a part of a twin-screw extruder used in Examples and Comparative Examples.

### EXPLANATION OF REFERENCE NUMERALS

A1: First feed port; A2: Second feed port; A3: Third feed port; A4: Fourth feed port; B: Vent; 1: Forward flighted screw portion; 2: Kneading disk portion; 3: Forward flighted screw portion; 4: Kneading disk portion; 5: Forward flighted screw portion; 6: Kneading disk portion; 7: Forward flighted screw portion; 8: Seal ring; 9: Forward flighted screw portion

### PREFERRED EMBODIMENTS FOR CARRYING OUT THE INVENTION

The present invention is described in detail below. The PBT resin used in the present invention is a polyester resin containing a terephthalic acid component in an amount of not less than 80 mol% on the basis of whole dicarboxylic acid components and a 1,4-butanediol component in an amount of not less than 50 mol% on the basis of whole diol components. The content of the terephthalic acid component is preferably not less than 85 mol% and more preferably not less than 95 mol% on the basis of the whole dicarboxylic acid components, whereas the content of the 1,4-butanediol component is preferably not less than 80 mol% and more preferably not less than 95 mol% on the basis of the whole diol components. Meanwhile, the terephthalic acid component may include ester-forming derivatives of terephthalic acid such as alkyl esters of terephthalic acid.

The molecular weight of the PBT resin is controlled such that the intrinsic viscosity [η] thereof is usually 0.5 to 3 and preferably 0.55 to 1.2 as measured at 30°C in a mixed solvent containing 1,1,2,2-tetrachloroethane and phenol at a weight ratio of 1/1. When the intrinsic viscosity of the PBT resin is less than 0.5, the resultant PBT pellets tend to be insufficient in mechanical properties. Whereas, when intrinsic viscosity of the PBT resin is more than 3, the resultant PBT pellets tend to be deteriorated in moldability. The intrinsic viscosity of the PBT resin may also be controlled to the above-specified range by using combination of two or more kinds of polyester resins which are different in intrinsic viscosity from each other.

Examples of the crosslinking agent used in the present invention include compounds containing two or more ethylenically unsaturated bonds in a molecule thereof. Specific examples of the crosslinking agent include diacrylates such as diethylene glycol diacrylate; dimethacrylates such as ethylene glycol dimethacrylate and dipropylene glycol dimethacrylate; triacrylates such as trimethylol methane triacrylate and trimethylol propane triacrylate; trimethacrylates such as trimethylol ethane trimethacrylate and trimethylol propane trimethacrylate; triallyl isocyanurate; triallyl cyanurate; diallyl maleate; and diallyl fumarate. These crosslinking agents are activated when exposed to an ionizing radiation and undergo a crosslinking reaction. In particular, triallyl cyanurate and triallyl isocyanurate are preferred since these compounds exhibit a poor thermal reactivity with the PBT resin upon mixing steps such as melting and kneading with the resin.

In the present invention, the amount of the crosslinking agent used is controlled such that the content of the crosslinking agent in the below-mentioned PBT resin pellets is 1 to 25 parts by weight, preferably 1 to 20 parts by weight, more preferably 2 to 15 parts by weight and especially preferably 2 to 12 parts by weight on the basis of 100 parts by weight of the PBT resin. When the content of the crosslinking agent is too small, the crosslinking reaction tends to hardly proceed even when exposed to an ionizing radiation, thereby failing to attain inherent effects of the crosslinking agent. On the other hand, when the content of the crosslinking agent is too large, the molded product obtained from the PBT resin pellets tends to suffer from severe change in color tone thereof and also tends to be deteriorated in mechanical strength. Further, the crosslinking agent tends to be scattered around upon producing the molded product, resulting in risk of occurrence of molding troubles.

The most important feature of the present invention resides in that not less than 75% by weight of the crosslinking agent in the PBT resin pellets remains in an unreacted (unmodified) state. The content of the unreacted crosslinking agent in the PBT resin pellets is preferably not less than 80% by weight and more preferably not less than 85% by weight. When the content of the unreacted crosslinking agent in the PBT resin pellets is less than the above-specified range, it may be difficult to obtain a molded product from the PBT resin pellets. Further, the crosslinking reaction of the resultant molded product tends to hardly proceed even upon exposure to an ionizing radiation, thereby failing to attain inherent effects of the crosslinking agent.

According to the present invention, the PBT resin pellets are produced by feeding a polybutylene terephthalate resin into a twin-screw extruder, feeding the crosslinking agent into the extruder on a downstream side of a position at which the polybutylene terephthalate resin is fed into the extruder, and controlling a residence time of the crosslinking agent within the extruder to not more than 2 min.

Among the steps involved in the process for producing the molded product from the PBT resin and the crosslinking agent, as the step of causing reduction in the content of the unreacted crosslinking agent (i.e., the step where the crosslinking agent undergoes a crosslinking reaction), there may be present the step of exposing the crosslinking agent to a temperature as high as not less than 200°C, i.e., the step of melting and kneading the PBT resin and the crosslinking agent together to produce resin composition pellets, and the step of molding the resin composition pellets melted and kneaded.

However, according to the present inventors' study, it has been found that the former melting and kneading step is important to ensure a high residual percentage of the unreacted crosslinking agent. In the latter molding step, in general, the closed system is used or the resin is immediately solidified. Therefore, if the resin temperature is kept in an adequate range, the crosslinking agent can be prevented from suffering from undesirable modification.

The process for producing the PBT resin pellets according to the present invention has been attained on the basis of the above finding. In particular, the crosslinking agent having a melting point close to room temperature such as triallyl isocyanurate and triallyl cyanurate is heat-melted and liquefied upon use. The production process of the present invention is especially suitably used in the applications using a liquid crosslinking agent.

As the twin-screw extruder, there may be used various types of twin-screw extruders as long as they have at least two feed ports for raw materials. The rotation of screws in the extruder may be either a co-rotation or a counter rotation. The twin-screw extruder used in the present invention is preferably of a co-rotational intermeshing type. The feed ports for the raw materials are sequentially referred to as the first feed port, the second feed port, etc., from an upstream side of the extruder. The PBT resin as a main raw material is fed from the feed port located on the upstream side, and the liquid crosslinking agent is added or injected into the extruder from the feed port located on a downstream side of the feed port for the PBT resin by using a liquid feed pump, etc. At this time, when in the screw structure of the extruder, a reverse flighted kneading disk or a reverse flighted screw is used in combination therewith, at least one resin-filled region is provided in each of the upstream and downstream sides of the feed port for the liquid crosslinking agent, so that a region incompletely filled with the resin is formed between the resin-filled regions. The liquid crosslinking agent may be supplied to such an incompletely resin-filled region.

Also, by providing the resin-filled regions on the upstream and downstream sides of the feed position for the liquid crosslinking agent, the liquid crosslinking agent can be prevented from being discharged toward upstream and downstream sides of the extruder. Further, since the concentration of the liquid crosslinking agent in the incompletely resin-filled region formed between the resin-filled regions is enhanced, the liquid crosslinking agent can be readily dispersed in the resin by a shearing action owing to rotation of forward flighted kneading disks or forward flighted screws, so that the kneading operation can be continuously performed in a stable manner. In addition, the liquid crosslinking agent can be blended in the resin in a substantially quantitative manner without significant loss of the liquid crosslinking agent added.

The extruder may be further provided with feed ports for other components or a vent port open to reduced pressure or atmospheric air. However, upon blending the liquid crosslinking agent in the PBT resin, if the vent port having a too high vacuum degree is provided on a downstream side of the position where the crosslinking agent is fed into the extruder, the crosslinking agent tends to be volatilized, so that it may be difficult to blend a desired amount of the crosslinking agent in the resin. In this case, the vacuum degree of the vent port is usually from 0 to -0.08 MPa and preferably from 0 to -0.04 MPa relative to atmospheric pressure. In the more preferred embodiment, on a downstream side of a vent port having a high vacuum degree, a seal portion constructed from a seal ring, a reverse flighted screw, a reverse flighted kneading disk, etc., is formed, and the crosslinking agent is added on a downstream side of the seal portion. In such a preferred embodiment, the liquid crosslinking agent can be added without volatilization thereof. In this case, bubbles and volatile components other than the crosslinking agent can be removed through the vent port, resulting in stable extrusion procedure.

The temperatures of a barrel and a die of the extruder are usually set to 230 to 285°C and preferably 240 to 280°C. The rotating speed of the screws is usually 100 to 700 rpm and preferably 150 to 600 rpm. However, it is important that the rotating speed of the screws and the position of addition of the crosslinking agent are determined such that the residence time of the liquid crosslinking agent in the extruder is not more than 2 min. In the above process, since the liquid crosslinking agent is readily dispersed in the resin, even though the residence time of the liquid crosslinking agent in the extruder is as short as not more than 2 min, the crosslinking agent can be well kneaded with the resin.

The resin composition for obtaining the PBT resin pellets of the present invention may also contain, if required, a reinforcing filler. As the reinforcing filler, there may be used various known fillers for thermoplastic resins. The reinforcing filler may have any shape such as a fiber shape, a plate shape and a granular shape. Specific examples of the reinforcing filler include fibrous fillers such as glass fibers, carbon fibers, mineral fibers, metal fibers, ceramic whiskers and wollastonite; plate-shaped fillers such as glass flakes, mica and talc; and granular fillers such as silica, alumina, glass beads, carbon black and calcium carbonate.

The fillers used may be selected depending upon properties required for the products produced from the PBT resin pellets. In general, when the mechanical strength or rigidity is required, the fibrous fillers, in particular, glass fibers, are selectively used, whereas when the anisotropy and reduced warpage of the molded products are required, the plate-shaped fillers, in particular, mica, are selectively used. Also, the granular fillers, if used, may be selected in view of a good balance of whole properties including a fluidity upon molding. These fillers may be selectively used according to conventionally known techniques.

For example, the glass fibers are generally used for the purpose of reinforcing resins. More specifically, there may be used long fiber-type fillers (roving), short fiber-type fillers (chopped strands) or the like. The fiber diameter of these fillers is usually 6 to 13 µm. Further, the glass fibers used may be treated, for example, with a sizing agent such as polyvinyl acetate and polyesters, a coupling agent such as silane compounds and boron compounds, or other surface treating agents.

The position of the extruder where the fillers are fed thereinto is not particularly limited. For example, the glass fibers may be preferably fed into the extruder on a downstream side of the feed port for the crosslinking agent.

Also, the PBT resin composition for obtaining the PBT resin pellets of the present invention may also contain, if required, various additives for resins other than those described above. The additives for resins are not particularly limited. Examples of the additives for resins include antioxidants, heat stabilizers, weather stabilizers, lubricants, mold release agents, catalyst deactivators, nucleating agents, crystallization accelerators, ultraviolet absorbers, dyes and pigments, antistatic agents, foaming agents, plasticizers and impact resistance modifiers.

In addition, the PBT resin composition for obtaining the PBT resin pellets of the present invention may also contain, if required, other thermoplastic or thermosetting resins. Examples of these other resins include thermoplastic resins such as polyethylene, polypropylene, polystyrene, polyacrylonitrile, polymethacrylates, ABS resins, polycarbonates, polyamides and polyphenylene sulfides, and thermosetting resins such as phenol resins, melamine resins, silicone resins and epoxy resins. These other resins may be used in combination of any two or more thereof.

The position of the extruder where the above additives for resins and the other resins are fed thereinto is not particularly limited. These components may be added either through the same feed port for the PBT resin or through other different feed ports.

The molded product of the present invention may be produced from the PBT resin pellets of the present invention by ordinary molding methods. That is, as the molding method, there may be employed an injection-molding method, an extrusion-molding method, a compression-molding method, a blow-molding method, etc. The PBT resin pellets of the present invention can be molded into various products which are used in various application fields such as electric and electronic equipments, automobiles, mechanical apparatuses and medical equipments. In particular, among the above molding methods, preferred are an injection-molding method and an extrusion-molding method, because the PBT resin pellets of the present invention can exhibit a good fluidity in these methods. The resin temperature used in the injection-molding method or the extrusion-molding method is usually 230 to 290°C and preferably 240 to 280°C from the standpoint of ensuring a suitable residual percentage of the crosslinking agent in the pellets.

Examples of the ionizing radiation include an electron beam and an ultraviolet ray. As the electron beam, there may be used, for example, 400 KGy electron beam. The electron beam may be readily generated from various known electron beam accelerators such as Dynamitron-type accelerators. Further, the ultraviolet ray may be readily generated from light sources such as a low-pressure mercury lamp and a metal halide lamp.

### EXAMPLES

The present invention is described in more detail by the following Examples. However, these Examples are only illustrative and not intended to limit a scope of the present invention. Meanwhile, the materials and apparatuses used in the following Examples and Comparative Examples are shown in Table 1.

**Table 1**

| | |
|---|---|
| PBT resin | "NOVADURAN5008" produced by Mitsubishi Engineering-Plastics Corporation; intrinsic viscosity: 0.85 dL/g |
| Triallyl isocyanurate | "TAIC" produced by Nippon Kasei Chemical Co., Ltd. |
| Glass fibers | "T-187" produced by Nippon Electric Glass Co., Ltd.; fiber diameter: 13 µm |
| Co-rotational intermeshing-type twin-screw extruder | "TEX30HSST" produced by Japan Steel Works, Ltd. |

### Example 1:

The twin-screw extruder as shown in Fig. 1 was used in this Example. In the twin-screw extruder, from an upstream side thereof, there were sequentially provided a first feed port (A1), a second feed port (A2), a third feed port (A3), a vent (B) and a fourth feed port (A4). Further, the extruder is provided at a tip end thereof with a die (not shown).

In Fig. 1, the reference numerals (1), (3), (5), (7) and (9) represent forward flighted screw portions; the reference numerals (2), (4) and (6) represent kneading disk portions; and the reference numeral (8) represents a seal ring. The above forward flighted screw portions were respectively constructed from three kinds of screws which were different in length and lead from each other. The kneading disk portion (2) was constructed from 10 forward flighted kneading disks, 5 straight flighted kneading disks and 5 reverse flighted kneading disks which were arranged from an upstream side of the extruder in this order, whereas the kneading disk portions (4) and (6) were respectively constructed from 5 forward kneading disks, 5 neutral kneading disks and 5 reverse kneading disks.

The PBT resin was supplied from the first feed port (A1) at a feed rate of 13 kg/hr, and the glass fiber was supplied from the third feed port (A3) at a feed rate of 6 kg/hr. Triallyl isocyanurate was heated and melted, and supplied from the fourth feed port (A4) at a feed rate of 1 kg/hr (5% by weight based on the composition) by using a liquid feed pump. The amount of the triallyl isocyanurate added was 5% by weight on the basis of the total weight of the composition, and was 7.69% by weight on the basis of the weight of the PBT resin.

The extruder was operated at a barrel set temperature of 250°C, a die set temperature of 260°C and a screw rotating speed of 200 rpm. The vacuum degree of the vent was -0.09 MPa. In the extruder, resin-filled regions were respectively formed in the regions (2), (4) and (6) in which the reverse flighted kneading disks were disposed, and on upstream sides of the seal ring (8) and the die. The strand withdrawn from a tip end of the die was cooled in a water bath, and then cut into pellets.

Meanwhile, the residence time within the extruder was measured by the following method. That is, when extruding the resin composition by rotating the respective screws, one master batch pellet of the PBT resin containing 20% by weight of carbon black was dropped through each of the first, second and fourth feed port to measure the time elapsed from the dropping time at each feed port until the strand extruded was colored black. The residence time was determined from the thus measured time.

The obtained PBT resin pellets were dried, and then molded at a resin temperature of 250°C and a mold temperature of 80°C by using an injection-molding machine "SE50" manufactured by Sumitomo Juki Kogyo Co., Ltd., to form a (0.8 mm-thick) UL test specimen and a ASTM No. 4 dumbbell test specimen. Successively, both the test specimens were irradiated with a 400 KGy electron beam using an electron accelerator "DYNAMITRON" (5 MeV) (voltage: 2.0 MeV; current: 20.0 mA) manufactured by RDI Inc.

The PBT resin pellets and the test specimens before the irradiation of electron beam were analyzed by the following method to measure the amounts of TAIC and unreacted TAIC. In addition, the storage elastic modulus and tensile strength of the test specimens after the irradiation of electron beam were measured. Further, in order to evaluate an extrusion stability, the number of cutting of strands was measured. The results are shown in Table 2.

### (1) Quantitative determination of residual TAIC in PBT resin pellets and molded product (UL test specimen):

The PBT resin pellets and the UL test specimen were subjected to elemental analysis. The amount of residual TAIC was calculated from the amount of nitrogen analyzed.

### (2) Quantitative analysis of unreacted TAIC in PBT resin pellets and molded product (UL test specimen):

The PBT resin pellets and the UL test specimen were frozen with a liquefied nitrogen, pulverized into not more than 0.1 mm in size by using an ultra centrifugal pulverizer "ZM100" manufactured by Retche Co., Ltd., and then subjected to hexane extraction and methanol extraction by the following methods.

### <Extraction of TAIC with hexane>

1.0 g of the pulverized product was mixed with 50 cc of hexane, and the obtained mixture was stirred for 30 min using a magnetic stirrer to extract a solvent-soluble component therefrom. The obtained solution was filtered to recover a filtrate (filtrate 1) and a filter cake (filter cake 1). The filter cake 1 was further treated with 50 cc of hexane in the same manner as described above to extract a solvent-soluble component therefrom, and the obtained solution was filtered in the same manner as described above to recover a filtrate (filtrate 2) and a filter cake (filter cake 2). The above procedure was repeated once to obtain a filtrate (filtrate 3) and a filter cake (filter cake 3). The filtrates 1, 2 and 3 were mixed with each other, and hexane was evaporated from the resultant mixture using a rotary evaporator to recover the extracted solvent-soluble component therefrom. The thus recovered solvent-soluble component was mixed with 25 cc of chloroform and dissolved therein. The resultant solution was subjected to gas chromatography to analyze the composition and amounts. The analysis was conducted in a temperature range of 100 to 250°C at a temperature rise rate of 10°C/min using a gas chromatograph "GC-2010" and a column "UA-17" (15 m) both manufactured by Shimadzu Seisakusho Co., Ltd. As a result of the analysis, it was confirmed that the solvent-soluble component was TAIC.

### <Extraction of TAIC with methanol>

The filter cake 3 was further mixed with methanol to extract a solvent-soluble component therefrom. The same methanol extraction procedure was repeated five times. The (five) filtrates obtained from the methanol extraction procedures were mixed with each other, and methanol was evaporated from the resultant mixture by using a rotary evaporator similarly to the above hexane extraction to recover the extracted soluble-soluble component therefrom. The thus recovered solvent-soluble component was mixed with 25 cc of chloroform and dissolved therein. The resultant solution was subjected to gas chromatography in the same manner as described above to analyze the composition and amounts. As a result of the analysis, it was confirmed that the solvent-soluble component was TAIC.

The total amount of TAIC quantitatively determined by the hexane extraction method and the methanol extraction method was regarded as the amount of unreacted TAIC. The amount of unreacted TAIC was divided by the amount of residual TAIC, and multiplied by 100 to calculate a residual percentage (%) of the unreacted TAIC.

### (3) Extrusion stability:

The extruder was operated for 30 min under the conditions described in the respective Examples and Comparative Examples to count the number of cuttings on the extruded strand as an index of an extrusion stability of the resin. The smaller number of cuttings on the extruded strand indicates a more excellent extrusion stability of the resin.

### (4) Measurement of storage elastic modulus:

The soldering heat resistance was evaluated by measuring a storage elastic modulus of a dynamic viscoelasticity at 250°C. First, the UL test specimen (thickness: 0.8 mm) irradiated with an electron beam was cut into a test piece having a length of 30 mm and a width of 5 mm. The test piece was cramped with a jig and then heated from 40°C to 250°C at a temperature rise rate of 3°C/min. Next, a sinusoidal strain of 110 Hz was applied to the test piece to measure a storage elastic modulus at the respective temperatures. The measurement was performed by using a dynamic viscoelasticity measuring apparatus "Rheogel E-4000" manufactured by UBM Co., Ltd. Meanwhile, the storage elastic modulus at 250°C is evaluated as a scale of deformability under load at 250°C which is higher than a melting point of the PBT resin. Therefore, the higher storage elastic modulus indicates a more excellent soldering heat resistance.

### (5) Measurement of tensile strength:

The ASTM No. 4 dumbbell test specimen irradiated with an electron beam was subjected to tensile test at a rate of 2 mm/min to measure a tensile strength thereof.

### Examples 2 and 3 and Comparative Examples 1 to 4:

The same procedure as defined in Example 1 was conducted except that amounts of the PBT resin and TAIC blended, the screw rotating speed and the feed position of TAIC were changed as shown in Table 2, thereby obtaining pellets and a molded product. The amount of TAIC was analyzed, and the mechanical properties of the molded product after being irradiated with an electron beam were measured by the same method as defined in Example 1. The results are shown in Table 2.

**Table 2**

| Items | | Unit | Examples | | |
|---|---|---|---|---|---|
| | | | 1 | 2 | 3 |
| PBT resin | | wt% | 65 | 65 | 65 |
| "TAIC" | | wt% | 5 | 5 | 5 |
| Glass fibers | | wt% | 30 | 30 | 30 |
| Screw rotating speed | | rpm | 200 | 200 | 175 |
| Feed position of "TAIC" | | Feed port | Fourth | Second | Second |
| Residence time of "TAIC" in extruder | | sec | 18 | 81 | 93 |
| Vacuum degree of vent | | MPa | -0.09 | Opened | Opened |
| Amount of residual "TAIC" in pellets (A)* | | wt% | 7.38 | 6.95 | 6.91 |
| Amount of unreacted "TAIC" in pellets (B)* | | wt% | 6.72 | 5.98 | 5.86 |
| (B)/(A) in pellets | | % | 91 | 86 | 85 |
| Amount of residual "TAIC" in molded product (A)* | | wt% | 7.28 | 6.71 | 6.63 |
| Amount of unreacted "TAIC" in molded product (B)* | | wt% | 6.48 | 5.63 | 5.23 |
| (B)/(A) in molded product | | % | 89 | 84 | 79 |
| Extrusion stability | | - | 0 | 2 | 1 |
| Storage elastic modulus after being crosslinked by irradiation of electron beam (250°C) | | - | 6.10E +07 | 5.20E +07 | 5.00E +07 |
| Tensile strength after being crosslinked by irradiation of electron beam | | MPa | 112 | 107 | 105 |

| Items | Unit | Comparative Examples | | | |
|---|---|---|---|---|---|
| | | 1 | 2 | 3 | 4 |
| PBT resin | wt% | 65 | 65 | 65 | 64 |
| "TAIC" | wt% | 5 | 5 | 5 | 6 |
| Glass fibers | wt% | 30 | 30 | 30 | 30 |
| Screw rotating speed | rpm | 200 | 200 | 100 | 100 |
| Feed position of "TAIC" | Feed port | First | First | Second | Second |
| Residence time of "TAIC" in extruder | sec | 135 | 135 | 161 | 161 |
| Vacuum degree of vent | MPa | Opened | -0.09 | Opened | Opened |
| Amount of residual "TAIC" in pellets (A)* | wt% | 6.63 | 5.15 | 6.91 | 8.36 |
| Amount of unreacted "TAIC" in pellets (B)* | wt% | 4.85 | 3.80 | 4.97 | 5.76 |
| (B)/(A) in pellets | % | 73 | 74 | 72 | 69 |
| Amount of residual "TAIC" in molded product (A) * | wt% | 6.49 | 4.71 | 6.63 | 8.13 |
| Amount of unreacted "TAIC" in molded product (B)* | wt% | 4.63 | 3.40 | 4.63 | 5.53 |
| (B)/(A) in molded product | % | 71 | 72 | 70 | 68 |
| Extrusion stability | - | 1 | 0 | 2 | 1 |
| Storage elastic modulus after being crosslinked by irradiation of electron beam (250°C) | - | 3.90E +07 | 2.60E +07 | 4.10E +07 | 4.25E +07 |
| Tensile strength after being crosslinked by irradiation of electron beam | MPa | 98 | 97 | 98 | 99 |

| | | | | | |
|---|---|---|---|---|---|
| Note *: Value based on 100 parts by weight of PBT resin | | | | | |

### Examples 4 and 5 and Comparative Examples 5 and 6:

The same procedure as defined in Example 1 was conducted except that no glass fibers were blended, and the PBT resin and TAIC were used in amounts shown in Table 3, thereby obtaining pellets and a molded product. The amount of residual TAIC, extrusion stability, storage elastic modulus and tensile strength were measured by the same methods as defined in Example 1. The results are shown in Table 3.

**Table 3**

| Items | Unit | Examples | | Comparative Examples | |
|---|---|---|---|---|---|
| | | 4 | 5 | 5 | 6 |
| PBT resin | wt% | 90 | 90 | 90 | 90 |
| "TAIC" | wt% | 10 | 10 | 10 | 10 |
| Glass fibers | wt% | 0 | 0 | 0 | 0 |
| Screw rotating speed | rpm | 200 | 200 | 200 | 200 |
| Feed position of "TAIC" | Feed port | Fourth | Second | First | First |
| Residence time of "TAIC" in extruder | sec | 18 | 81 | 135 | 135 |
| Vacuum degree of vent | MPa | -0.09 | Opened | Opened | -0.09 |
| Amount of residual "TAIC" in pellets (A)* | wt% | 10.78 | 10.72 | 10.29 | 8.26 |
| Amount of unreacted "TAIC" in pellets (B)* | wt% | 10.03 | 9.76 | 7.61 | 6.21 |
| (B)/(A) in pellets | % | 93 | 91 | 74 | 75 |
| Amount of residual "TAIC" in molded product (A)* | wt% | 10.72 | 10.31 | 10.20 | 8.00 |
| Amount of unreacted "TAIC" in molded product (B)* | wt% | 9.64 | 9.16 | 7.44 | 5.81 |
| (B)/(A) in molded product | % | 90 | 89 | 73 | 73 |
| Extrusion stability | - | 0 | 2 | 3 | 0 |
| Storage elastic modulus after being crosslinked by irradiation of electron beam (250°C) | - | 3.20E +06 | 2.80E +06 | 1.90E +06 | 1.10E +06 |
| Tensile strength after being crosslinked by irradiation of electron beam | MPa | 45 | 43 | 38 | 36 |

| | | | | | |
|---|---|---|---|---|---|
| Note *: Value based on 100 parts by weight of PBT resin | | | | | |

From Tables 2 and 3, the following results were recognized.
(i) When comparing Examples 1 to 3 in which the percentage of the amount of the unreacted TAIC to the amount of the residual TAIC in the PBT resin pellets was not less than 75% with Comparative Examples 1 to 4 in which the above percentage was less than 75%, the storage elastic modulus and the tensile strength were considerably varied therebetween. When the percentage was not less than 75%, it was confirmed that the soldering heat resistance and tensile modulus were remarkably improved.
(ii) When comparing Example 2 and Comparative Example 4 in which the amount of TAIC blended and the screw rotating speed were controlled such that both were different in the percentage of the amount of the unreacted TAIC to the amount of the residual TAIC in the PBT resin pellets from each other, but were substantially identical in the amount of the unreacted TAIC in the PBT resin pellets (or molded product thereof) to each other, the storage elastic modulus and tensile strength of Comparative Example 4 in which the content of the unreacted TAIC was smaller, were deteriorated as compared to that of Example 2. The reason therefor is considered to be that the modified TAIC disturbs the effect of improving the storage elastic modulus.
(iii) In Examples 4 and 5 and Comparative Examples 5 and 6 in which no glass fibers (reinforcing filler) were used, the same results as those described in the above (i) were obtained.

From the above-mentioned results, it was recognized that by selecting the conditions, in particular, the melting and kneading conditions upon production of the pellets such that the percentage of the amount of the unreacted TAIC to the amount of the residual TAIC in the PBT resin pellets was not less than 75%, it was possible to obtain the PBT pellets (i.e., PBT resin molded products) which were excellent in soldering heat resistance and strength.

Thus, in accordance with the present invention, there can be obtained a PBT resin molded product which is improved in soldering heat resistance without adding an excessive amount of a crosslinking agent thereto and inhibiting a crosslinking reaction by exposure to an ionizing radiation from proceeding. More specifically, the PBT resin pellets of the present invention can be used in various extensive applications requiring improved heat resistance including reflow resistance and the like, such as electric and electronic parts, automobile electric parts and mechanical precision parts, e.g., typically surface mounting connectors.

## Claims

1. Ionizing radiation-crosslinking polybutylene terephthalate resin pellets comprising a crosslinking agent capable of acting upon exposure to an ionizing radiation,
a content of the crosslinking agent in the resin pellets being 1 to 25 parts by weight on the basis of 100 parts by weight of the polybutylene terephthalate resin, and
a content of an unreacted component in the crosslinking agent being not less than 75% by weight on the basis of the weight of the crosslinking agent.

2. Ionizing radiation-crosslinking polybutylene terephthalate resin pellets according to claim 1, wherein the crosslinking agent is triallyl isocyanurate and/or triallyl cyanurate.

3. A process for producing the polybutylene terephthalate resin pellets as defined in claim 1 or 2, comprising:
feeding a polybutylene terephthalate resin into a twin-screw extruder;
feeding the crosslinking agent into the extruder on a downstream side of a position at which the polybutylene terephthalate resin is fed into the extruder; and
controlling a residence time of the crosslinking agent within the extruder to not more than 2 min.

4. A process according to claim 3, wherein the crosslinking agent has a melting point of not less than 20°C.

5. A molded product of an ionizing radiation-crosslinking polybutylene terephthalate resin which is produced by molding the resin pellets as defined in claim 1 or 2.
